# EUROPEAN PATENT SPECIFICATION

(11) **EP 3 029 298 B1**
(45) Date of publication and mention of the grant of the patent: **20.09.2017**
(21) Application number: 15197223.9
(22) Date of filing: 01.12.2015
(51) Int. Cl.: F02C 7/05, F02C 7/18, B01D 45/04, B01D 45/16

(54) **TURBOMACHINE AIR INLETS WITH LIQUID SEPARATION**
LUFTEINLÄSSE EINER TURBOMASCHINE MIT FLÜSSIGKEITSTRENNUNG
ECOPES D'ADMISSION D'AIR DE TURBOMACHINE AVEC SEPARATION DE LIQUIDE

(30) Priority: 01.12.2014 US 201462086050 P
(43) Date of publication of application: 08.06.2016
(73) Proprietor: United Technologies Corporation, Farmington, CT 06032 (US)
(72) Inventor: ZYSMAN, Steven H., Amston, CT Connecticut 06231-1505 (US); RATAJAC, Aleksandar, San Diego, CA California 92117 (US)
(74) Representative: Hall, Matthew Benjamin

(56) References cited:
- US-A- 4 456 458
- US-A1- 2008 099 631
- US-A1- 2010 150 700
- US-A1- 2010 215 481
- US-A1- 2010 223 905
- US-A1- 2014 037 437

## Description

### BACKGROUND

### 1. Field

The present disclosure relates to gas turbines, more specifically to air inlets disposed on gas turbine nacelles.

### 2. Description of Related Art

Traditionally, core nacelles of turbomachines can include air scoops disposed thereon for guiding air from the bypass flow into the core for cooling through cooling holes defined in the core nacelle. However, turbomachines can be subject to oil leaks outside of the core nacelle which can streak and/or aerosolize into the air scoops.

US 2014/0037437 A1 discloses a scoop to direct air from a bypass flow into an engine core. US 2010/0223905 A1 discloses a scoop for a fairing of a core engine.

Such conventional methods and systems have generally been considered satisfactory for their intended purpose. However, there is still a need in the art for improved air scoops. The present disclosure provides a solution for this need.

### SUMMARY

According to the present invention, an air scoop for a gas turbine engine according to the features of claim 1 is provided. The air scoop for a gas turbine engine, comprising: a base which is attachable to a nacelle of the gas turbine engine; an air outlet defined in the base; a scoop body disposed on the base and defining a scoop inlet for separating liquid particles from an air flow, wherein the scoop inlet is in fluid communication with the air outlet to supply scoop air to the air outlet; a scoop outlet aft of the scoop inlet and the air outlet; and a separator lip extending from the base to the scoop inlet which spaces the scoop inlet apart from the base to raise the scoop body above liquids streaking along the base, wherein the scoop body includes a reducing cross-sectional flow area in a direction downstream from the scoop inlet.

In addition to one or more of the features described above, the base can include one or more attachment holes.

In addition to one or more of the features described above, the scoop body can include a flat outer surface.

In addition to one or more of the features described the scoop body can include a round outer surface.

In addition to one or more of the features described above, the scoop body can include a flat inner surface, wherein the air outlet is defined in the flat inner surface.

In addition to one or more of the features described above, the scoop body can include a rounded inner surface, wherein the air outlet is defined in the rounded inner surface.

In addition to one or more of the features described above, the scoop inlet can be semi-circular, circular, elliptical, or any other suitable shape.

In addition to one or more of the features described above, the separator lip can include a curved surface extending forward from the base.

In addition to one or more of the features described above, the separator lip can include an edged surface with two sides that meet at an apex under the scoop body.

In addition to one or more of the features described above, the two sides can be flat.

In addition to one or more of the features described above, the two sides can be curved.

There is also disclosed an air scoop including a base which is attachable to a nacelle of a turbomachine, an air outlet defined in the base, and a scoop body disposed on the base and defining a scoop inlet, wherein the scoop inlet is in fluid communication with the air outlet to supply scoop air to the air outlet, wherein the scoop body includes a scoop outlet aft of the scoop inlet and the air outlet.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below by way of example only and with reference to certain figures, wherein:
Fig. 1 is a partial cross-sectional view of a turbomachine in accordance with this disclosure, showing a partial internal and external view thereof;
Fig. 2A is a perspective view of an embodiment of an air scoop in accordance with this disclosure, showing a scoop body extending from a base;
Fig. 2B is a front elevation view of the air scoop of Fig. 2A, showing the internal structure of the air scoop;
Fig. 2C is a top plan view of the air scoop of Fig. 2A, showing the outer profile of the scoop body;
Fig. 2D is a cross-sectional side elevation view of the air scoop of Fig. 2A, schematically showing oil being separated from airflow by the air scoop;
Fig. 3A is a perspective view of an embodiment of an air scoop in accordance with this disclosure, showing a scoop body extending from a base;
Fig. 3B is a front elevation view of the air scoop of Fig. 3A, showing the internal structure of the air scoop;
Fig. 3C is a top plan view of the air scoop of Fig. 3A, showing the outer profile of the scoop body;
Fig. 4A is a perspective view of an embodiment of an air scoop in accordance with this disclosure, showing a scoop body extending from a base;
Fig. 4B is a front elevation view of the air scoop of Fig. 4A, showing the internal structure of the air scoop;
Fig. 4C is a top plan view of the air scoop of Fig. 4A, showing the outer profile of the scoop body; and
Fig. 4D is a cross-sectional side elevation view of the air scoop of Fig. 4A, schematically showing oil being separated from airflow by the air scoop.

### DETAILED DESCRIPTION

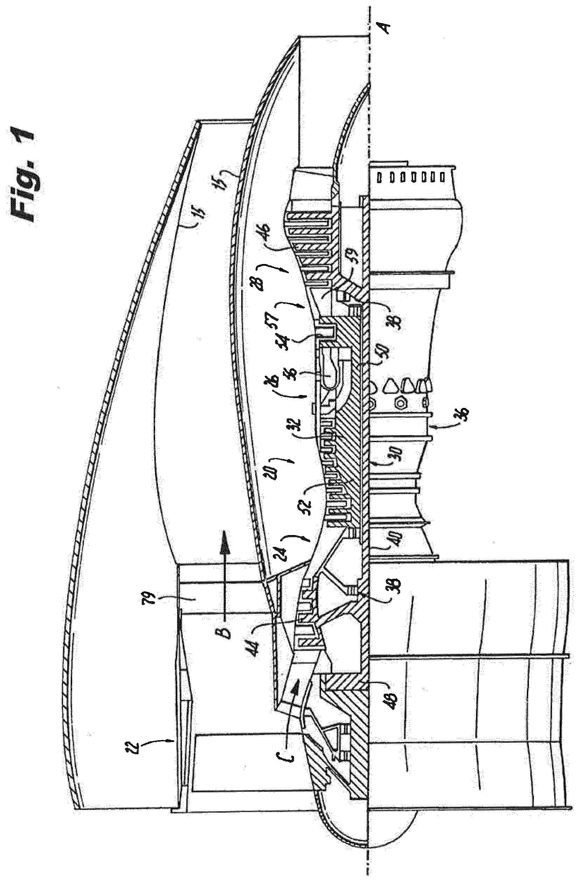

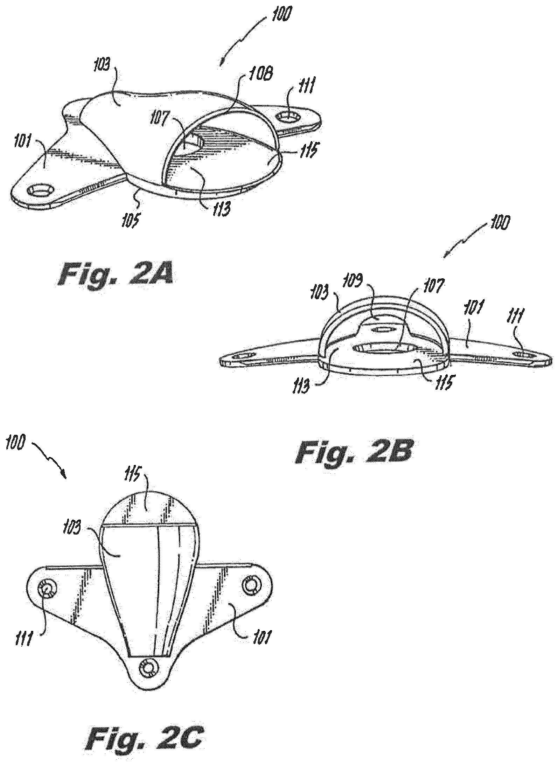

Reference will now be made to the drawings wherein like reference numerals identify similar structural features or aspects of the subject disclosure. For purposes of explanation and illustration, and not limitation, an illustrative view of an exemplary embodiment of an air scoop in accordance with the disclosure is shown in Figs. 2A-2D and is designated generally by reference character 100. Other exemplary embodiments and/or aspects of this disclosure are shown in Figs. 1 and 3A-4D. The systems and methods described herein can be used to separate liquids (e.g., oil) from bypass airflow thereby reducing or preventing liquids from traveling into the core of a turbomachine through cooling holes.

Fig. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]0.5. The "Low corrected fan tip speed" as disclosed herein according to one non-limiting embodiment is less than about 1150 ft / second (350.5 meters/second).

Referring to Figs. 2A-2D, air scoop 100 includes a base 101 which is attachable to the inner wall of nacelle (e.g., nacelle 15) of a turbomachine (e.g., gas turbine engine 20). The air scoop 100 includes an air outlet 107 defined in the base 101 and a scoop body 103 disposed on the base 101. The air outlet 107 can be defined at an abrupt angle (e.g., about 90 degrees) relative to the direction of airflow. Any other suitable angle is contemplated herein.

The scoop body 101 defines a scoop inlet 108 which is in fluid communication with the air outlet 107 to supply scoop air to the air outlet 107. The air outlet 107 supplies cooling air to the external components of the engine 20. The scoop inlet 108 can be semi-circular, however, it is contemplated that the scoop inlet 108 can include any suitable shape.

The air scoop 100 also includes separator lip 105 extending from the base 101 to the scoop inlet 108 which spaces the scoop inlet 108 apart from the base 101 to raise the scoop body 103 above liquids (e.g., oil) streaking along the base 101. As shown in Figs. 2A-2D, the separator lip 105 can include a curved surface extending forward from the base 101. However, any suitable lip shape is contemplated herein. The scoop body 103 includes a scoop outlet 109 aft of the scoop inlet 108 and the air outlet 107 for separating liquid particles from the air flow as described below. The scoop outlet 109 can include any suitable cross-sectional shape and/or area.

The base 101 can include one or more attachment holes 111 for attaching the scoop 100 to the core nacelle 33 via any suitable attachment (e.g., bolts, rivets). Any other suitable attachment is contemplated herein (e.g., adhesives, welding, forming the nacelle 33 with a scoop thereon).

As shown, the scoop body 103 can include a reducing cross-sectional flow area in a direction downstream from the scoop inlet 108. This can speed up the airflow near the air outlet 107 for helping separate liquid from the airflow, as will be described in more detail below. Any other suitable internal profile is contemplated herein (e.g., a non-reducing cross-sectional area).

The scoop body 103 can include a tapered and/or rounded outer surface as shown. The scoop body 103 can also include a flat inner surface 113 wherein the air outlet 107 is defined in the flat inner surface 113. The scoop body 103 can also include a protrusion 115 extending away from the scoop inlet 108.

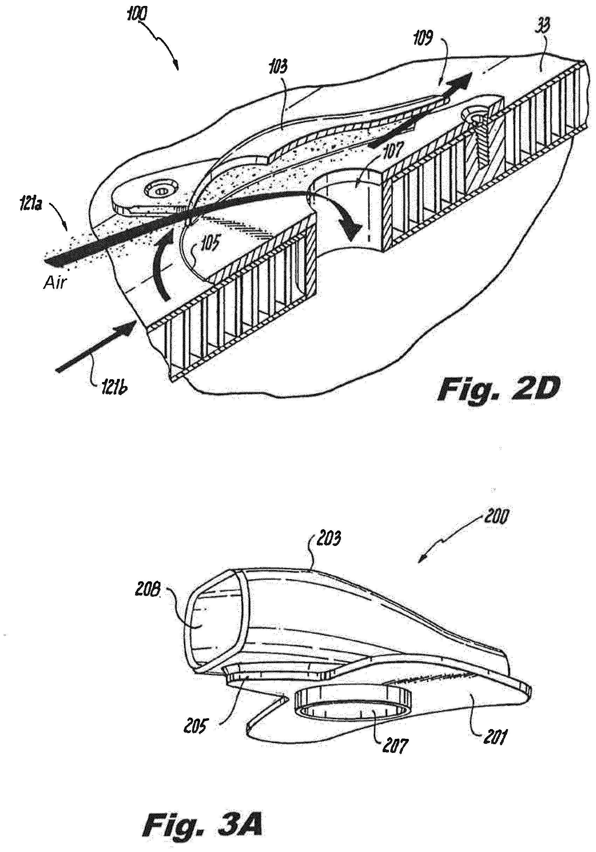

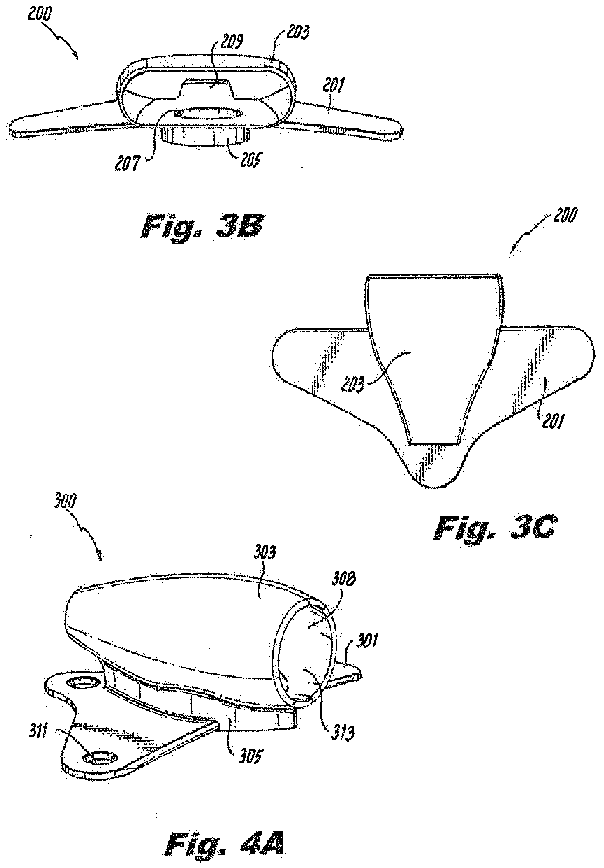

Referring to Figs. 3A-3C, air scoop 200 includes a base 201, scoop body 203, a scoop inlet 208, an air outlet 207, and a scoop outlet 209 similar as described above. The scoop inlet 208 is semi-circular and/or pill-shaped. As shown, the scoop body 203 includes a partially flat outer surface unlike the air scoop 100 of Figs. 2A-2D.

The air scoop 200 also includes separator lip 205 extending from the base 201 to the scoop inlet 208 which spaces the scoop inlet 208 apart from the base 201 to raise the scoop body 203 above liquids (e.g., oil, for reasons explained below) streaking along the nacelle wall 15. The separator lip 205 can include an edged surface with two sides that meet at an apex under the scoop body 203. As shown, the two sides can be flat. In other embodiments, the two sides can be at least partially curved.

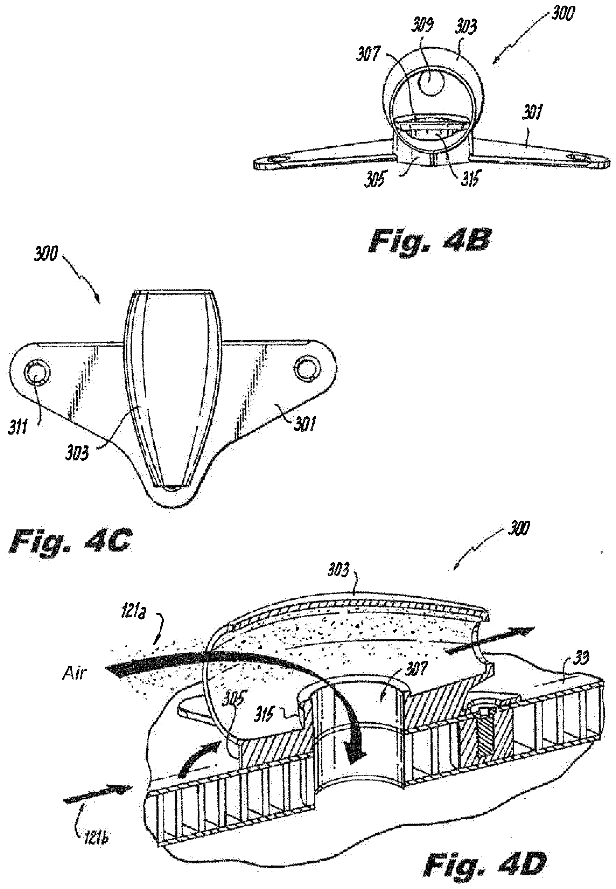

Referring to Figs. 4A-4D, air scoop 300 includes a base 301, scoop body 303, a scoop inlet 308, an air outlet 307, and a scoop outlet 309, and attachment holes 311 similar as described above. The scoop inlet 308 is circular. As shown, the scoop body 303 includes a rounded/tapered outer surface unlike the air scoop 200 of Figs. 3A-3C.

The air scoop 300 also includes separator lip 305 extending from the base 301 to the scoop inlet 308 which functions in the same manner as separator lip 105. The separator lip 305 is similarly shaped as separator lip 205. The scoop body 303 of air scoop 300 includes a rounded inner surface 313 such that the air outlet 307 is defined in the rounded inner surface 313. Additionally, the scoop body 303 can include a ramp portion 315 configured to ramp airflow away from the air outlet 307 as shown in Fig. 4D.

As described herein, each air scoop 100, 200, 300 can be used to separate leaked oil and/or other liquids from bypass airflow to prevent oil from entering the core of the engine. For example, referring to Fig. 2D, airflow carrying oil droplets 121a can be separated from the oil droplets by the scoop body 103 since the air outlet 107 is disposed at a 90 degree angle relative to the direction of flow and the scoop outlet 109 is present. Since the oil droplets 121a have greater inertia than the air, the oil droplets 121a tend to continue through the scoop body 103 to the scoop outlet 109, whereas the airflow bends into the air outlet 107 to a lower pressure. At the same time, separator lip 105 prevents streaking oil 121b from entering the scoop body 103 by diverting streaking oil 121b around the scoop body 103.

Fig. 4D shows the embodiment of Fig. 4A separating oil from air flow. For similar reasons, oil droplets 121a and streaking oil 121b are separated from the air flow by the scoop body 303 and the separator lip 305. Additionally, ramp 315 increases the angle relative to the air outlet 307 so that the inertial forces of the oil droplets 121a in the air flow further prevent the oil droplets 121a from flowing into the air outlet 307.

The methods and systems of the present disclosure, as described above and shown in the drawings, provide for air scoops with superior properties including air flow and liquid separation. While the apparatus and methods of the subject disclosure have been shown and described with reference to embodiments, those skilled in the art will readily appreciate that changes and/or modifications may be made thereto without departing from the scope of the subject disclosure as defined by the appended claims.

## Claims

1. An air scoop for a gas turbine engine, comprising:
a base (101; 201; 301) which is attachable to a nacelle of the gas turbine engine;
an air outlet (107; 207; 307) defined in the base;
a scoop body (103; 203; 303) disposed on the base and defining a scoop inlet (108; 208; 308), wherein the scoop inlet is in fluid communication with the air outlet to supply scoop air to the air outlet (107;207;307); and
a separator lip (105; 205; 305) extending from the base to the scoop inlet which spaces the scoop inlet apart from the base to raise the scoop body above liquids streaking along the base,
**characterised in that**:
the scoop body includes a scoop outlet (109;209;309) aft of the scoop inlet (108;208;308) and the air outlet (107;207;307) for separating liquid particles from the air flow; and
the scoop body (103; 203; 303) includes a reducing cross-sectional flow area in a direction downstream from the scoop inlet (108; 208; 308).

2. The air scoop of claim 1, wherein the base (101; 201; 301) includes one or more attachment holes.

3. The air scoop of claim 1 or 2, wherein the scoop body (203) includes a flat outer surface.

4. The air scoop of claim 1 or 2, wherein the scoop body (103; 303) includes a round outer surface.

5. The air scoop of any preceding claim, wherein the scoop body (103; 203) includes a flat inner surface, wherein the air outlet (107; 207) is defined in the flat inner surface.

6. The air scoop of any of claims 1 to 4, wherein the scoop body (303) includes a rounded inner surface, wherein the air outlet (307) is defined in the rounded inner surface.

7. The air scoop of claim 1 or 2, wherein the scoop inlet (108) is semi-circular.

8. The air scoop of claim 1 or 2, wherein the scoop inlet (308) is circular.

9. The air scoop of claim 1 or 2, wherein the separator lip (105) includes a curved surface extending forward from the base (101).

10. The air scoop of claim 1 or 2, wherein the separator lip (205) includes an edged surface with two sides that meet at an apex under the scoop body.

11. The air scoop of claim 10, wherein the two sides are flat.

12. The air scoop of claim 10, wherein the two sides are curved.

## Patentansprüche

1. Lufthutze für ein Gasturbinentriebwerk, die Folgendes umfasst:
einen Träger (101; 201; 301), der an eine Gondel des Gasturbinentriebwerks angebracht werden kann;
einen Luftauslass (107; 207; 307), der im Träger definiert ist;
einen Hutzenkörper (103; 203; 303), der auf dem Träger angeordnet ist und einen Hutzeneinlass (108; 208; 308) definiert,
wobei der Hutzeneinlass in Fluidverbindung mit dem Luftauslass steht, um Hutzenluft an den Luftauslass (107; 207; 307) zu liefern; und
eine Trennlippe (105; 205; 305), die sich vom Träger bis zum Hutzeneinlass erstreckt, die den Hutzeneinlass vom Träger beabstandet, um den Hutzenkörper über die Fluide, die entlang des Trägers streifen, zu heben,
**dadurch gekennzeichnet, dass**:
der Hutzenkörper einen Hutzenauslass (109; 209; 309) hinter dem Hutzeneinlass (108; 208; 308) und dem Luftauslass (107; 207; 307) zur Trennung der flüssigen Partikel aus dem Luftfluss aufweist; und
der Hutzenkörper (103; 203; 303) eine sich reduzierende Fließquerschnittsfläche in einer dem Hutzeneinlass (108; 208; 308) nachgestellten Richtung aufweist.

2. Lufthutze nach Anspruch 1, wobei der Träger (101; 201; 301) eine oder mehrere Befestigungsbohrungen aufweist.

3. Lufthutze nach Anspruch 1 oder 2, wobei der Hutzenkörper (203) eine flache Außenfläche aufweist.

4. Lufthutze nach Anspruch 1 oder 2, wobei der Hutzenkörper (103; 303) eine runde Außenfläche aufweist.

5. Lufthutze nach einem der vorhergehenden Ansprüche, wobei der Hutzenkörper (103; 203) eine flache Innenfläche aufweist, wobei der Luftauslass (107; 207) in der flachen Innenfläche definiert ist.

6. Lufthutze nach einem der Ansprüche 1 bis 4, wobei der Hutzenkörper (303) eine runde Innenfläche aufweist, wobei der Luftauslass (307) in der runden Innenfläche definiert ist.

7. Lufthutze nach Anspruch 1 oder 2, wobei der Hutzeneinlass (108) halbkreisförmig ist.

8. Lufthutze nach Anspruch 1 oder 2, wobei der Hutzeneinlass (308) kreisförmig ist.

9. Lufthutze nach Anspruch 1 oder 2, wobei die Trennlippe (105) eine gekrümmte Fläche aufweist, die sich vom Träger (101) vorwärts erstreckt.

10. Lufthutze nach Anspruch 1 oder 2, wobei die Trennlippe (205) eine berandete Fläche mit zwei Seiten aufweist, die an einer Spitze unter dem Hutzenkörper zusammentreffen.

11. Lufthutze nach Anspruch 10, wobei beide Seiten flach sind.

12. Lufthutze nach Anspruch 10, wobei beide Seiten gekrümmt sind.

## Revendications

1. Prise d'air pour un moteur à turbine à gaz, comprenant :
une base (101 ; 201 ; 301) qui peut être fixée à une nacelle du moteur à turbine à gaz ;
une écope de sortie d'air (107 ; 207 ; 307) définie dans la base ;
un corps de prise (103 ; 203 ; 303) disposé sur la base et définissant une écope d'admission de prise (108 ; 208 ; 308),
dans laquelle l'écope d'admission de prise est en communication fluidique avec l'écope de sortie d'air pour fournir de l'air de prise à l'écope de sortie d'air (107 ; 207 ; 307) ; et
une lèvre de séparateur (105 ; 205 ; 305) s'étendant depuis la base vers l'écope d'admission de prise qui écarte l'écope d'admission de prise de la base pour élever le corps de prise au-dessus des traces de liquides le long de la base,
**caractérisée en ce que** :
le corps de prise comprend une écope de sortie de prise (109 ; 209 ; 309) à l'arrière de l'écope d'admission de prise (108 ; 208 ; 308) et de l'écope de sortie d'air (107 ; 207 ; 307) pour séparer des particules liquides de l'écoulement d'air ; et
le corps de prise (103 ; 203 ; 303) comprend une zone d'écoulement transversale de réduction dans une direction en aval de l'écope d'admission de prise (108 ; 208 ; 308).

2. Prise d'air selon la revendication 1, dans laquelle la base (101 ; 201 ; 301) comprend un ou plusieurs trous de fixation.

3. Prise d'air selon la revendication 1 ou 2, dans laquelle le corps de prise (203) comprend une surface extérieure plate.

4. Prise d'air selon la revendication 1 ou 2, dans laquelle le corps de prise (103 ; 303) comprend une surface extérieure ronde.

5. Prise d'air selon une quelconque revendication précédente, dans laquelle le corps de prise (103 ; 203) comprend une surface intérieure plate, dans laquelle l'écope de sortie d'air (107 ; 207) est définie dans la surface intérieure plate.

6. Prise d'air selon l'une quelconque des revendications 1 à 4, dans laquelle le corps de prise (303) comprend une surface intérieure arrondie, dans laquelle l'écope de sortie d'air (307) est définie dans la surface intérieure arrondie.

7. Prise d'air selon la revendication 1 ou 2, dans laquelle l'écope d'admission de prise (108) est semi-circulaire.

8. Prise d'air selon la revendication 1 ou 2, dans laquelle l'écope d'admission de prise (308) est circulaire.

9. Prise d'air selon la revendication 1 ou 2, dans laquelle la lèvre de séparateur (105) comprend une surface courbée s'étendant vers l'avant depuis la base (101).

10. Prise d'air selon la revendication 1 ou 2, dans laquelle la lèvre de séparateur (205) comprend une surface bordée avec deux côtés qui se croisent au niveau d'un sommet en dessous du corps de prise.

11. Prise d'air selon la revendication 10, dans laquelle les deux côtés sont plats.

12. Prise d'air selon la revendication 10, dans laquelle les deux côtés sont courbés.
